# EUROPÄISCHE PATENTSCHRIFT

(11) **EP 3 113 178 B1**
(45) Veröffentlichungstag und Bekanntmachung des Hinweises auf die Patenterteilung: **11.04.2018**
(21) Anmeldenummer: 16175191.2
(22) Anmeldetag: 20.06.2016
(51) Int. Cl.: G10L 15/22

(54) **VERFAHREN UND VORRICHTUNG ZUM AUSWÄHLEN EINES BESTANDTEILS EINER SPRACHEINGABE**
METHOD AND DEVICE FOR SELECTING A COMPONENT OF A SPEECH INPUT
PROCEDE ET DISPOSITIF DE SELECTION D'UN COMPOSANT D'UNE ENTREE VOCALE

(30) Priorität: 02.07.2015 DE 102015212413
(43) Veröffentlichungstag der Anmeldung: 04.01.2017
(73) Patentinhaber: Volkswagen Aktiengesellschaft, 38440 Wolfsburg (DE)
(72) Erfinder: Lüddecke, Daniel, 38104 Braunschweig (DE); Spika, Marius, 38104 Braunschweig (DE); Berner, Eva, 38106 Braunschweig (DE); Schneider, Jens, 39108 Magdeburg (DE)

(56) Entgegenhaltungen:
- US-A1- 2005 171 926
- US-A1- 2007 208 567
- US-A1- 2012 245 936
- US-A1- 2012 290 303
- US-A1- 2014 372 122

## Beschreibung

Die vorliegende Erfindung betrifft ein Verfahren und eine Vorrichtung zum Auswählen eines Bestandteils einer Spracheingabe.

Spracherkennungssysteme finden ein breites Anwendungsspektrum für Bediensysteme. Dies betrifft gleichermaßen die Bedienung von Geräten sowie die Erledigung fernmündlicher Aufgaben mittels Sprachcomputer, beispielsweise Telefon-Banking. Auch hat sich die Bedienung von Einrichtungen eines Fahrzeugs über Spracheingaben als wesentliches Merkmal aktueller Benutzerschnittstellen im Fahrzeug etabliert. Beispielsweise werden zur Eingabe komplexer Sachverhalte entsprechende Informationen durch ein Sprachdialogsystem sequentiell vom Nutzer abgefragt.

Es ist dabei von entscheidender Bedeutung, dass das System auch mit fehlerhaften Eingaben des Nutzers oder fehlerhaften Textumsetzungen umgehen kann bzw. dem Nutzer erlaubt, seine Eingaben nötigenfalls zu korrigieren. Dies ist insbesondere, aber nicht nur bei der Eingabe von längerem Text wichtig, etwa beim Diktieren einer E-Mail. Dem Nutzer muss hier eine Möglichkeit geboten werden, den erkannten Text von sich aus zu korrigieren. Gleichzeitig soll die Bedienung die Aufmerksamkeit des Nutzers nicht zu sehr in Anspruch nehmen. Dies ist insbesondere bei Systemen in Fahrzeugen wichtig, da der Fahrer nicht vom Verkehrsgeschehen abgelenkt wird.

Die US 2007/0073540 A1 beschreibt eine Spracherkennung, bei der eine Korrektur durch Wiederholen eines Satzes oder Satzteils vorgenommen werden kann. Bei der Eingabe zweier Äußerungen wird erkannt, ob die zweite Äußerung zur ganzen oder zu einem Teil der ersten Äußerung passt und dieser erkannte Teil wird korrigiert. Bei diesem Verfahren wird anhand der Audiodaten analysiert, mit welcher Wahrscheinlichkeit Teile der beiden Äußerungen zusammengehören, etwa mittels einer Fourier-Transformation, und die Korrektur wird vorgenommen.

Die EP 2 133 869 A2 beschreibt ein Verfahren zum Korrigieren eines Texts. Dabei wird ein bestimmtes Wort in Abhängigkeit von den Bewegungen eines Bedienelements ausgewählt. Es ist ausreichend, wenn sich das Bedienelement dem bestimmten Wort annähert. Um das ausgewählte Wort zu korrigieren, wird dann ein Bearbeitungsbildschirm geöffnet.

Die US 2007/0208567 A1 beschreibt ein Verfahren zur Fehlerkorrektur bei einer automatischen Spracherkennung, bei dem Informationen zu hypothetischen Wörtern und ihren entsprechenden Konfidenzwerten abgerufen werden. Wörter mit höheren Konfidenzwerten werden bei der Wiedergabe der Spracherkennung anders dargestellt als Wörter mit geringeren Konfidenzwerten.

Es ist die Aufgabe der vorliegenden Erfindung, ein Verfahren und eine Vorrichtung der eingangs genannten Art bereitzustellen, mit denen der Nutzer vom System fehlerhaft erkannte Spracheingaben schnell und zuverlässig erkennen und auswählen kann.

Erfindungsgemäß wird diese Aufgabe durch ein Verfahren der oben genannten Art mit den Merkmalen des Anspruchs 1 und durch eine Vorrichtung der oben genannten Art mit den Merkmalen des Anspruchs 4 gelöst. Vorteilhafte Ausgestaltungen und Weiterbildungen ergeben sich aus den abhängigen Ansprüchen.

Bei dem erfindungsgemäßen Verfahren wird die Spracheingabe erfasst, wobei die Spracheingabe mehrere Bestandteile umfasst. Die erfasste Spracheingabe wird verarbeitet und ein Text wird erkannt. Weiterhin wird zu jedem Bestandteil der Spracheingabe eine Erkennungswahrscheinlichkeit ermittelt, welche angibt, mit welcher Wahrscheinlichkeit der Bestandteil korrekt erkannt worden ist. Der erkannte Text der Spracheingabe wird auf einer Anzeigefläche wiedergegeben. Für jeden Bestandteil wird der Wert eines Parameters zum Auswählen des Bestandteils mittels einer Eingabeeinrichtung in Abhängigkeit von der ermittelten Erkennungswahrscheinlichkeit eingestellt. Die Erkennungswahrscheinlichkeit muss dabei für den Nutzer nicht erkennbar wiedergegeben werden. Vielmehr wird durch den Wert des Parameters insbesondere festgelegt, auf welche Art oder wie einfach der Bestandteil ausgewählt werden kann. Ein Bestandteil mit geringer Erkennungswahrscheinlichkeit wird vom Nutzer mit höherer Wahrscheinlichkeit zum Korrigieren ausgewählt als ein Bestandteil mit hoher Erkennungswahrscheinlichkeit. Ein Bestandteil mit geringer Erkennungswahrscheinlichkeit sollte daher einfacher auszuwählen sein als ein Bestandteil mit hoher Erkennungswahrscheinlichkeit. Über den Zusammenhang des Werts des Parameters zum Auswählten des Bestandteils und der Erkennungswahrscheinlichkeit ermöglicht es das erfindungsgemäße Verfahren vorteilhafterweise, dass fehlerhaft erkannte Bestandteile der Spracheingabe schnell und einfach vom Nutzer ausgewählt werden können.

Die Abhängigkeit des Werts des Parameters von der Erkennungswahrscheinlichkeit kann dabei einem einfachen funktionalen Zusammenhang, beispielsweise einer linearen Funktion, folgen. Im Allgemeinen kann der Wert des Parameters auch einem beliebigen funktionalen Zusammenhang folgen.

Weiterhin kann ein Wert des Parameters insbesondere einen Bereich der Erkennungswahrscheinlichkeit repräsentieren. Alternativ kann auch jedem Wert der Erkennungswahrscheinlichkeit ein Wert des Parameters zugeordnet werden, so dass der Wert des Parameters die Erkennungswahrscheinlichkeit kontinuierlich repräsentiert.

Der Bestandteil der Spracheingabe umfasst insbesondere zumindest ein Wort. Dies ermöglicht vorteilhafterweise, dass jedes einzelne Wort der erfassten Spracheingabe auf einfache Weise ausgewählt und dann gegebenenfalls vom Nutzer korrigiert werden kann.

Bei dem erfindungsgemäßen Verfahren umfasst die Eingabeeinrichtung eine auf der Anzeigefläche angeordnete berührungsempfindliche Oberfläche. Der Bestandteil wird durch Berühren der berührungsempfindlichen Oberfläche ausgewählt, wobei der Parameter eine Größe eines Berührungsbereichs, welcher zum Auswählen des Bestandteils berührt werden muss, umfasst. Die Eingabeeinrichtung wird daher von einem sogenannten Touchscreen bereitgestellt. Dabei ist insbesondere der Berührungsbereich umso größer, je kleiner die ermittelte Wahrscheinlichkeit für den Bestandteil ist. Dadurch können Bestandteile der Spracheingabe, deren Erkennungswahrscheinlichkeit gering ist, vorteilhafterweise einfacher ausgewählt werden als Bestandteile der Spracheingabe, für die eine hohe Erkennungswahrscheinlichkeit ermittelt wurde. Die Bestandteile mit geringer Erkennungswahrscheinlichkeit müssen dann nicht genau vom Nutzer auf dem Touchscreen getroffen werden. Die Berührungsbereiche können dem Nutzer beispielsweise auf der Anzeigefläche visualisiert werden, so dass dem Nutzer zusätzlich angezeigt wird, welcher Bestandteil mit hoher Wahrscheinlichkeit falsch erkannt worden ist. Alternativ können Bestandteile mit geringer Erkennungswahrscheinlichkeit hervorgehoben dargestellt werden. Dadurch wird der Nutzer besser auf solche Bestandteile aufmerksam gemacht und muss diese nicht von selbst erkennen.

Ferner betrifft die Erfindung eine Vorrichtung zum Auswählen eines Bestandteils einer Spracheingabe. Die Vorrichtung umfasst eine Spracherfassungseinheit, mittels welcher eine Spracheingabe erfassbar ist. Zudem umfasst die Vorrichtung eine Spracherkennungseinheit, mittels welcher die Spracheingabe verarbeitbar und ein Text erkennbar ist. Weiterhin umfasst die Vorrichtung eine Ermittlungseinheit, mittels welcher zu jedem Bestandteil der Spracheingabe eine Erkennungswahrscheinlichkeit ermittelbar ist, welche angibt, mit welcher Wahrscheinlichkeit der Bestandteil korrekt erkannt worden ist. Auf einer Anzeigefläche ist der erkannte Text wiedergebbar und mittels einer Eingabeeinrichtung ist ein Bestandteil der Spracheingabe auswählbar. Mittels einer Steuervorrichtung, ist zu jedem Bestandteil der Spracheingabe der Wert eines Parameters zum Auswählen des Bestandteils mittels der Eingabeeinrichtung in Abhängigkeit von der ermittelten Erkennungswahrscheinlichkeit einstellbar.

Bei der erfindungsgemäßen Vorrichtung ist auf der Anzeigefläche eine berührungsempfindliche Oberfläche angeordnet, so dass ein Bestandteil der Spracheingabe mittels Berührung auswählbar ist, wobei der Parameter eine Größe eines Berührungsbereichs umfasst, welcher zum Auswählen des Bestandteils berührt werden muss. Die Anzeigefläche ist daher als Touchscreen ausgebildet.

Die Vorrichtung ist insbesondere zum Ausführen des erfindungsgemäßen Verfahrens geeignet und weist daher alle Vorteile des Verfahrens auf.

Eine solche Vorrichtung ist insbesondere in einem Fahrzeug angeordnet.

Die Erfindung wird nun anhand von Ausführungsbeispielen mit Bezug zu den Zeichnungen erläutert.
- Figur 1: zeigt schematisch ein Ausführungsbeispiel der erfindungsgemäßen Vorrichtung,
- Figur 2: zeigt schematisch eine Anzeige auf einer Anzeigefläche, wie sie von einem Ausführungsbeispiel des erfindungsgemäßen Verfahrens erzeugt wird, und
- Figur 3: zeigt ein Ausführungsbeispiel des erfindungsgemäßen Verfahrens.

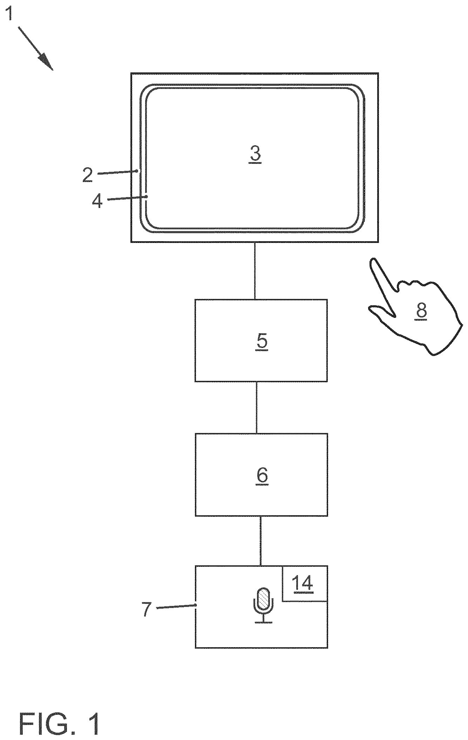

Im Folgenden wird mit Bezug zu Figur 1 ein Ausführungsbeispiel der erfindungsgemäßen Vorrichtung 1 beschrieben.

Die schematisch in Figur 1 gezeigte Vorrichtung 1 umfasst eine Anzeigevorrichtung 2 mit einer Anzeigefläche 3. Die Anzeigefläche 3 kann von einem Display, insbesondere einem Flüssigkristalldisplay, beliebiger Bauart bereitgestellt werden.

Auf der Anzeigefläche 3 ist eine Eingabeeinrichtung 4 angeordnet, welche als berührungsempfindliche Oberfläche ausgebildet ist. Mittels der berührungsempfindlichen Oberfläche 4 kann der Nutzer mittels eines Betätigungselements 8, beispielsweise seinem Finger, Eingaben tätigen kann. Es wird somit ein sogenannter Touchscreen bereitgestellt.

Die Vorrichtung 1 umfasst weiterhin eine Erfassungseinheit 7, welche als Mikrofon ausgebildet ist. Dadurch werden vom Nutzer getätigte Spracheingaben erfasst.

Zudem umfasst die Vorrichtung 1 eine Spracherkennungseinheit 14. In der Spracherkennungseinheit 14 wird die erfasste Spracheingabe verarbeitet, wobei sie in mehrere Bestandteile zerlegt wird und ein Text erkannt wird, welcher der Spracheingabe zugeordnet wird. Der erkannte Text wird dann über eine Ermittlungseinheit 6 an eine Steuervorrichtung 5 übertragen. Diese steuert die Anzeigefläche 3 derart an, dass der erkannte Text angezeigt wird.

Von der Ermittlungseinheit 6 wird zu jedem Bestandteil der Spracheingabe eine Erkennungswahrscheinlichkeit ermittelt. Hierfür überträgt die Spracherkennungseinheit 14 entsprechende Daten an die Ermittlungseinheit 6. Die Erkennungswahrscheinlichkeit gibt an, mit welcher Wahrscheinlichkeit der Bestandteil korrekt erkannt worden ist.

Von der Steuervorrichtung 5 wird dann in Abhängigkeit von der für jeden Bestandteil der Spracheingabe ermittelten Erkennungswahrscheinlichkeit der Wert eines Parameters zum Auswählen eines Bestandteils eingestellt. Ein solcher Parameter ist im Falle der Verwendung des Touchscreens ein Berührungsbereich, in dem der Bestandteil der Spracheingabe auf der Anzeigefläche 3 zum Auswählen berührt werden muss. Der zugehörige Wert ist dann die Größe des Berührungsbereichs.

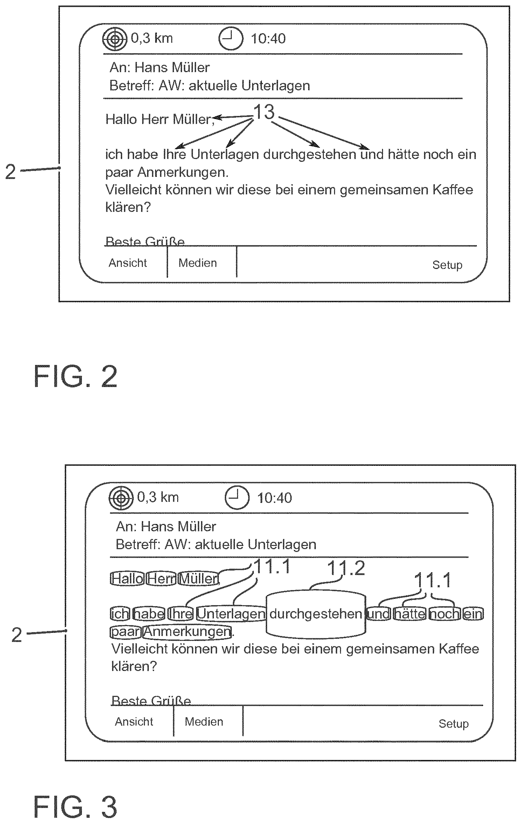

Mit Bezug zu den Figuren 2 und 3 wird ein Ausführungsbeispiel des erfindungsgemäßen Verfahrens erläutert, welches mit der Vorrichtung 1 ausgeführt wird.

Ausgangspunkt ist dabei, dass ein Nutzer einen Text für eine Nachricht per Spracheingabe eingibt. Der Nutzer spricht folgenden Text in das Mikrofon 7 ein:
"Hallo Herr Müller, ich habe Ihre Unterlagen durchgesehen und hätte noch ein paar Anmerkungen. Vielleicht können wir diese bei einem gemeinsamen Kaffee klären? Beste Grüße, Peter Meyer"

Die einzelnen Wörter werden dabei als einzelne Bestandteile 13 der Spracheingabe erfasst. Für jedes einzelne Wort 13 wird dann eine Erkennungswahrscheinlichkeit berechnet, mit welcher es korrekt erkannt worden ist.

Im vorliegenden Beispiel wurde von der Spracherkennungseinheit 14 anstatt des Wortes "durchgesehen" das Wort 13 "durchgestehen" erkannt. Es wird dabei von der Ermittlungseinheit 6 ermittelt, dass das Wort 13 "durchgestehen" lediglich mit einer geringen Erkennungswahrscheinlichkeit von 10% korrekt ist.
Allen anderen Wörter 13 wird eine Erkennungswahrscheinlichkeit zwischen 95% und 70%, alternativ zwischen 80% und 70%, zugeordnet.

Dem Nutzer wird der erkannte Text auf der Anzeigefläche 3 angezeigt, wie es in Figur 2 dargestellt ist. Bei der Darstellung des erkannten Textes werden die unterschiedlichen Erkennungswahrscheinlichkeiten der erkannten Wörter nicht weiter berücksichtigt.

Beim Lesen des Textes fällt dem Nutzer auf, dass der Text das Wort "durchgesehen" falsch als "durchgestehen" verstanden hat und möchte dieses als nächstes zum Korrigieren auswählen.

In Abhängigkeit von der für die einzelnen Wörter 13 berechneten Erkennungswahrscheinlichkeiten werden Werte für einen Parameter zum Auswählen der Wörter 13 ermittelt. Der Parameter umfasst dabei Berührungsbereiche 11.1 und 11.2, in welchem die berührungsempfindliche Oberfläche 4 berührt werden muss, um ein Wort 13 auszuwählen. Der Wert stellt die Größe der Berührungsbereiche 11.1 und 11.2 dar, gegebenenfalls relativ zur Größe des angezeigten Wortes. Für die Wörter 13 mit der Erkennungswahrscheinlichkeit zwischen 95% und 70% wird der Berührungsbereich 11.1 bestimmt. Dieser Berührungsbereich 11.1 kennzeichnet sich dadurch aus, dass er genauso groß ist, wie das dargestellte Wort 13 selbst. Die Wahrscheinlichkeit, dass der Nutzer dieses Wort auswählt und korrigiert ist schließlich sehr gering. Die Größe des Berührungsbereichs 11.1 wird dabei von den Begrenzungen des dargestellten Worts 13, zu welchem er gehört, festgelegt. Der Berührungsbereich 11.1 wird dabei durch die Ausdehnung des dargestellten Worts 13 von oben nach unten und von links nach rechts festgelegt. Dadurch ergeben sich bereits durch unterschiedliche Längen von Wörtern 13 und unterschiedliche verwendete Buchstaben mit unterschiedlicher vertikaler Ausdehnung unterschiedliche Größen von Berührungsbereichen 11.1 bei gleicher Erkennungswahrscheinlichkeit.

Dem Wort "durchgestehen" wiederum wird der Berührungsbereich 11.2 zugeordnet. Da die Wahrscheinlichkeit, dass der Nutzer dieses Wort korrigieren möchte sehr hoch ist, ist dieser Berührungsbereich 11.2 deutlich größer ausgebildet als das dargestellte Wort "durchgestehen" selbst. Dabei ist im Vergleich zu einer Größe des Berührungsbereichs 11.1 beispielsweise eine vertikale Ausdehnung des Berührungsbereichs 11.2 größer. Die vertikale Ausdehnung der Berührungsbereiche 11.1 und 11.2 wird dabei in Abhängigkeit von der Erkennungswahrscheinlichkeit gewählt. Alternativ oder zusätzlich kann auch die horizontale Ausdehnung des Berührungsbereichs 11.2 im Vergleich zu einer Größe des Berührungsbereichs 11.1 größer sein.
Als Wert der Größe eines Berührungsbereichs 11.1 oder 11.2 wird daher insbesondere eine Größe ermittelt, die der Berührungsbereich 11.1 oder 11.2 über die Begrenzungen hinaus , die das dargestellte Wort 13 selbst vorgibt, aufweist. Um zu vermeiden, dass sich Berührungsbereiche 11.1 und 11.2 zweier benachbart zueinander angeordneter Wörter 13 überschneiden, wird insbesondere die vertikale Ausdehnung des Berührungsbereichs 11.1 oder 11.2 an die Erkennungswahrscheinlichkeit angepasst.

Dadurch wird es dem Nutzer erleichtert, das Wort 13 mit geringer Erkennungswahrscheinlichkeit zum Korrigieren auszuwählen. Der Nutzer muss aufgrund der Größe des Berührungsbereiches 11.2 das Wort 13 nicht exakt treffen. Vielmehr ist es ausreichend, wenn der Nutzer in der Nähe des zu korrigierenden Wortes "durchgestehen" die Anzeigefläche 3 berührt.

Die Größe der Berührungsbereiche 11.1 und 11.2 ist abhängig von der Größe der Erkennungswahrscheinlichkeit, die dem jeweiligen Wort 13 zugeordnet ist. Je kleiner die Erkennungswahrscheinlichkeit für ein Wort 13 ist, desto größer ist demnach ein dem Wort 13 zugeordneter Berührungsbereich 11.1 oder 11.2. Die Größe des Berührungsbereichs 11.1 und 11.2 gibt daher die Erkennungswahrscheinlichkeit für das Wort 13 wieder. Dabei müssen die Berührungsbereiche 11.1 bis 11.2 dem Nutzer nicht auf der Anzeigefläche 3 angezeigt werden. Die Erkennungswahrscheinlichkeiten der Wörter 13 müssen also von dem Nutzer nicht gezwungenermaßen wahrgenommen werden.

Das Wort 13 "durchgestehen" kann jedoch alternativ auch hervorgehoben dargestellt werden, um es dem Nutzer zu erleichtern, das als mit geringer Erkennungswahrscheinlichkeit korrekt erkannte Wort 13, zu identifizieren.

Alternativ können die Wörter 13 auch farbcodiert angezeigt werden, wobei die Farbe, in welcher ein Wort 13 dargestellt wird, die Erkennungswahrscheinlichkeit für das jeweilige Wort 13 repräsentiert.

### Bezugszeichenliste

- 1: Vorrichtung
- 2: Anzeigevorrichtung
- 3: Anzeigefläche
- 4: berührungsempfindliche Oberfläche
- 5: Steuervorrichtung
- 6: Ermittlungseinheit
- 7: Spracherfassungseinheit
- 8: Betätigungselement; Finger
- 11.1, 11.2: Berührungsbereich
- 13: Bestandteil; Wort
- 14: Spracherkennungseinheit

## Patentansprüche

1. Verfahren zum Auswählen eines Bestandteils (13) einer Spracheingabe, bei dem
die Spracheingabe erfasst wird, wobei die Spracheingabe mehrere Bestandteile (13) umfasst,
die erfasste Spracheingabe verarbeitet und ein Text erkannt wird,
zu jedem Bestandteil (13) der Spracheingabe eine Erkennungswahrscheinlichkeit ermittelt wird, welche angibt, mit welcher Wahrscheinlichkeit der Bestandteil (13) korrekt erkannt worden ist,
der erkannte Text der Spracheingabe auf einer Anzeigefläche (3) wiedergegeben wird
und
für jeden Bestandteil (13) der Wert eines Parameters zum Auswählen des Bestandteils (13) mittels einer Eingabeeinrichtung (4) in Abhängigkeit von der ermittelten Erkennungswahrscheinlichkeit eingestellt wird, wobei die Eingabeeinrichtung eine auf der Anzeigefläche (3) angeordnete berührungsempfindliche Oberfläche (4) umfasst und der Bestandteil (13) durch Berühren der berührungsempfindlichen Oberfläche (4) ausgewählt wird,
**dadurch gekennzeichnet**, das der Parameter eine Größe eines Berührungsbereichs (11.1, 11.2), welcher zum Auswählen des Bestandteils (13) berührt werden muss, umfasst.

2. Verfahren nach Anspruch 1,
**dadurch gekennzeichnet, dass**
der Bestandteil (13) der Spracheingabe zumindest ein Wort umfasst.

3. Verfahren nach Anspruch 1 oder 2,
**dadurch gekennzeichnet, dass**
der Berührungsbereich (11.1, 11.2) umso größer ist, je kleiner die ermittelte Erkennungswahrscheinlichkeit für den Bestandteil (13) ist.

4. Vorrichtung (1) zum Auswählen eines Bestandteils (13) einer Spracheingabe mit
einer Spracherfassungseinheit (7), die konfiguriert ist eine Spracheingabe zu erfassen, einer Spracherkennungseinheit, die konfiguriert ist die Spracheingabe zu verarbeiten und einen Text zu erkennen, einer Ermittlungseinheit (6), die konfiguriert ist zu jedem Bestandteil (13) der Spracheingabe eine Erkennungswahrscheinlichkeit zu ermitteln, welche angibt, mit welcher Wahrscheinlichkeit der Bestandteil (13) korrekt erkannt worden ist,
einer Anzeigefläche (3), die konfiguriert ist den erkannten Text wiederzugeben,
einer Eingabeeinrichtung (4, 9), die konfiguriert ist mittels ihr einen Bestandteil der Spracheingabe auszuwählen, und einer Steuervorrichtung (5), die konfiguriert ist zu jedem Bestandteil (13) der Spracheingabe den Wert eines Parameters zum Auswählen des Bestandteils (13) mittels der Eingabeeinrichtung (4) in Abhängigkeit von der ermittelten Erkennungswahrscheinlichkeit einzustellen, wobei die Eingabeeinrichtung eine auf der Anzeigefläche (3) angeordnete berührungsempfindliche Oberfläche (4) umfasst und der Bestandteil (13) durch Berühren der berührungsempfindlichen Oberfläche (4) auswählbar ist,
**dadurch gekennzeichnet, dass** der Parameter eine Größe eines Berührungsbereichs (11.1, 11.2), welcher zum Auswählen des Bestandteils (13) berührt werden muss, umfasst.

## Claims

1. Method for selecting a component (13) of a voice input, in which
the voice input is captured, the voice input comprising multiple components (13),
the captured voice input is processed and a text is identified,
for each component (13) of the voice input an identification probability is ascertained that indicates the probability of the component (13) having been identified correctly,
the identified text of the voice input is reproduced on a display panel (3) and
for each component (13) the value of a parameter for selecting the component (13) by means of an input device (4) is set on the basis of the ascertained identification probability,
wherein the input device comprises a touch-sensitive surface (4) arranged on the display panel (3) and the component (13) is selected by touching the touch-sensitive surface (4), **characterized in that** the parameter comprises a size of a touch area (11.1, 11.2) that needs to be touched to select the component (13).

2. Method according to Claim 1,
**characterized in that**
the component (13) of the voice input comprises at least one word.

3. Method according to Claim 1 or 2,
**characterized in that**
the touch area (11.1, 11.2) is all the larger the lower the ascertained identification probability for the component (13).

4. Apparatus (1) for selecting a component (13) of a voice input having
a voice capture unit (7) that is configured to capture a voice input,
a voice recognition unit that is configured to process the voice input and to identify a text,
an ascertainment unit (6) that is configured to ascertain for each component (13) of the voice input an identification probability that indicates the probability of the component (13) having been identified correctly,
a display panel (3) that is configured to reproduce the identified text,
an input device (4, 9) that is configured to be used to select a component of the voice input, and a control apparatus (5) that is configured to set, for each component (13) of the voice input, the value of a parameter for selecting the component (13) by means of the input device (4) on the basis of the ascertained identification probability, wherein the input device comprises a touch-sensitive surface (4) arranged on the display panel (3) and the component (13) is selectable by touching the touch-sensitive surface (4), **characterized in that** the parameter comprises a size of a touch area (11.1, 11.2) that needs to be touched to select the component (13).

## Revendications

1. Procédé de sélection d'une composante (13) d'une entrée vocale permettant de déterminer l'entrée vocale, dans lequel l'entrée vocale comprend une pluralité de composantes (13),
l'entrée vocale détectée est traitée et un texte est reconnu,
une probabilité de reconnaissance, qui indique la probabilité avec laquelle la composante (13) a été correctement reconnue, est déterminée pour chaque composante (13) de l'entrée vocale,
le texte reconnu de l'entrée vocale est reproduit sur une surface d'affichage (3) et,
pour chaque composante (13), la valeur d'un paramètre de sélection de la composante (13) est réglée au moyen d'un dispositif d'entrée (4) en fonction de la probabilité de reconnaissance déterminée,
dans lequel le dispositif d'entrée comprend une surface tactile (4) disposée sur la surface d'affichage (3) et la composante (13) est sélectionnée en touchant la surface tactile (4),
**caractérisé en ce que** le paramètre comprend une taille d'une surface de contact (11.1, 11.2) qui doit être touchée pour sélectionner la composante (13).

2. Procédé selon la revendication 1,
**caractérisé en ce que** la composante (13) de l'entrée vocale comprend au moins un mot.

3. Procédé selon la revendication 1 ou 2, **caractérisé en ce que** la zone de contact (11.1, 11.2) est d'autant plus grande que la probabilité de reconnaissance déterminée pour la composante (13) est faible.

4. Dispositif (1) de sélection d'une composante (13) d'une entrée vocale, comportant
une unité d'acquisition vocale (7) qui est configurée pour acquérir une entrée vocale,
une unité de reconnaissance vocale qui est configurée pour traiter l'entrée vocale et reconnaître un texte, une unité de détermination (6) qui est configurée pour déterminer une probabilité de reconnaissance pour chaque composante (13) de l'entrée vocale, indiquant la probabilité avec laquelle la composante (13) a été correctement reconnue,
une surface d'affichage (3) qui est configurée pour reproduire le texte reconnu,
un dispositif d'entrée (4, 9) qui est configuré pour sélectionner une composante de l'entrée vocale au moyen de celui-ci, et
un dispositif de commande (5) qui est configuré pour régler la valeur d'un paramètre de sélection de la composante (13) au moyen du dispositif d'entrée (4) pour chaque composante (13) de l'entrée vocale en fonction de la probabilité de reconnaissance déterminée,
le dispositif d'entrée comprend une surface tactile (4) disposée sur la surface d'affichage (3) et la composante (13) peut être sélectionnée en touchant la surface tactile (4),
**caractérisé en ce que** le paramètre comprend une taille d'une zone de contact (11.1, 11.2) qui doit être touchée pour sélectionner la composante (13).
